# EUROPEAN PATENT SPECIFICATION

(11) **EP 1 725 703 B1**
(45) Date of publication and mention of the grant of the patent: **10.06.2009**
(21) Application number: 05732495.6
(22) Date of filing: 14.03.2005
(51) Int. Cl.: D01F 1/06

(54) **ACTIVE AND ADAPTIVE PHOTOCHROMIC FIBERS,TEXTILES AND MEMBRANES**
AKTIVE UND ADAPTIVE PHOTOCHROME FASERN, TEXTILIEN UND MEMBRANEN
FIBRES, TEXTILES ET MEMBRANES PHOTOCHROMIQUES ACTIVES ET ADAPTATIVES

(30) Priority: 16.03.2004 US 553513 P
(43) Date of publication of application: 29.11.2006
(73) Proprietor: UNIVERSITY OF DELAWARE, Newark, DE 19716-1551 (US)
(72) Inventor: RABOLT, John,F., Greenville, DE 19807 (US); BIANCO, Andrea, I-22044 Inverigo (IT)
(74) Representative: Luderschmidt, Schüler & Partner
(86) International application number: PCT/US2005/008414
(87) International publication number: WO 2005/090654

(56) References cited:
- EP-A- 1 314 802
- JP-A- 6 313 210
- US-A- 5 422 181
- US-A1- 2001 045 547
- US-A1- 2003 087 566
- US-A1- 2003 168 756
- DATABASE WPI Week 198923 Derwent Publications Ltd., London, GB; AN 1989-169581 XP002426685 & JP 01 111007 A (SEIKO EPSON CORP) 27 April 1989 (1989-04-27)

## Description

In the prior art it is well known to color materials using dyes and pigments. Unfortunately, pigment and dye coloration agents suffer fading effects due to exposure to ultraviolet light, ozone or bleach. The usual cause of this fading is chemical changes in the colorant. These chemical changes alter the electronic transitions of the colorant, thereby causing undesired instability in color.

One reason for the fading of the dyes is that the dyes are coated to the surface of the fiber instead of being mixed throughout the fiber.

The investigation of structure/property relationships in materials often requires processing prior to the measurement of these properties. Fiber spinning is often the processing method of choice in long chain polymers because of the subsequent chain alignment that occurs during the shear and windup process. This alignment can give rise to highly anisotropic electrical, mechanical and photonic properties. Unfortunately commercial spinning lines need large (5-10 lbs) quantities of starting material in order to produce melt-spun fibers. This limits the candidates for investigation to those that are made in sufficiently large quantities and/or those that do not degrade at elevated temperatures, in the case of melt spinning. Solution spinning is possible as an alternative method but has been reserved for those polymers that dissolve in volatile and often times aggressive solvents (e.g., Kevlar in sulfuric acid).

It would be advantageous to provide improved methods of coloration that provide switchability from one color state to another. Such color changing compositions can be used, for example, for cosmetic purposes in polymer fibers used for textiles and carpets and for color-changing windows and displays, sensors (chemical sensor, pressure sensor, light sensor) and optical storage devices. Additionally, this type of technology could be used in military applications for camouflage clothing, tents, and machinery. If such color change is reversibly switched as a consequence of light exposure then chameleon effects can be achieved for such articles.

Although photochromic molecules have been embedded in polymer films, the advantage of having successfully incorporated them in fibers is that the surface area of these micro- and nanodiameter fibers is such that exposure to light uniformly converts the photochromic molecules to another color whereas in films, often the thickness (10-50 microns) prevents a complete color change in the interior of the film or it takes a long time that in many applications is not acceptable. In addition, the availability of single small fibers with photochromic properties should allow the development of an optical switch on the micron and submicron scale.

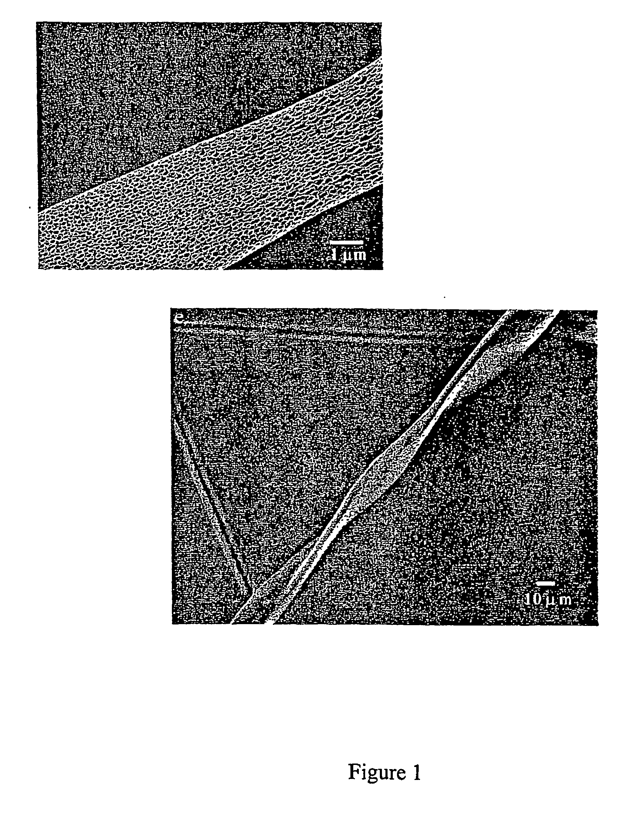

The electrospinning of fibers has been investigated for more than 30 years. However, since 1998 the number of publications on electrospun polymer nanofibers have grown exponentially, Z.M. Huang, Y. Z. Zhang, M. K. Kotaki and S. Ramakrishna, Composites Sci. and Tech. 2003, 63, 2223-2253 ("Huang"), US20030137069. Electrospinning, an offshoot of electrospraying, can be used to spin *spider-web* type fibers (see Figure 1) for characterization and testing of their mechanical and surface properties. The fibers produced during the electrospinning process are micro- and nanoscale, with diameters ranging (D. H. Reneker and I. Chun, Nanotechnology 1996, 7, 216 ("Reneker")) from 40 nm to 5 µm compared to traditional textile fibers which have diameters (Reneker) of 5 to 200-µm. The primary advantage of electrospinning is that it uses minute quantities (as little as 10-15 mg) of polymer in solution to form continuous fibers. A second advantage is that additional components, e.g., small "guest" molecules, nanoparticles or a second polymer can be added to the polymer solution and under certain conditions be incorporated into the fiber during the electrospinning process. Although a number of commodity polymers have already been electrospun (Huang and S. Megelski, J. S. Stephens, D. B. Chase and J. F. Rabolt, Macromolecules 2002, 35, 8456 ("Megelski"), an understanding of the mechanism and parameters that affect the electrospinning process is only starting to emerge. There are a limited number of parameters that appear to effect the fiber diameter, the concentration of "beads", the fiber surface morphology and the interconnectivity of polymer fibrils. These include solution concentration, distance between "nozzle" and target, molecular weight of the polymer, spinning voltage, humidity, solvent volatility and solution supply rate. Although some of these (e.g., molecular weight, humidity) have been investigated in detail (C. Casper, J. Stephens, N. Tassi, D. B. Chase and J. Rabolt, Macromolecules 2004, 37, 573-578 ("Casper") and Megelski most of the work has focused on investigation of the development of microstructure in fibers and their potential applications ranging from tissue engineering constructs to fuel cell membranes.

Photochromic materials are those whose color can change reversibly depending on the wavelength of light they are exposed to. The process of reversibility comes about when the material is exposed to light of a different wavelength than that used initially to induce the color change and, as a result, the material returns to its original color (J. Wittal, Photochromism, Molecules and Systems, Eds. H. Durr, H. Bouas-Laurent Elsevier, Amsterdam, 1990 ("Wittal") and M. Irie, Chem. Rev. 2000,100, 1685-1716 ("Irie"). Usually, organic photochromic molecules are highly aromatic chromophores that reversibly rearrange their electronic structure in response to certain wavelengths of light. An example of one such class of organic reversible photochromic materials are the diarylethenes (Irie). These molecules undergo changes in their electronic structure via a rearrangement of the bonds that comprise their ringed architecture as shown below:

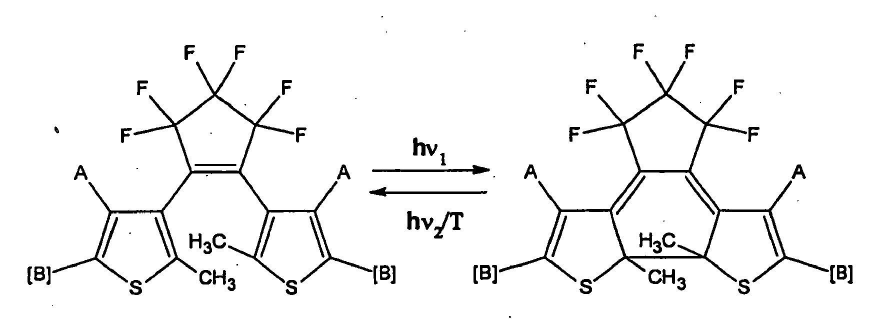

Two forms of diarylethylene are shown above: "open" - left; "closed" - right. A and B are pendant groups that can be used to tune solubility and/or absorption characteristics. This leads to the "open" and "closed" form ring structures with the former absorbing in the visible (500-700 nm) and the latter absorbing in the UV (250-300 nm). This class of molecules has a good fatigue resistance and also good thermal stability which makes them good candidates for applications in many fields.

Applications of these diarylethenes and numerous other photochromic materials in nonlinear optics, read-write storage materials, optical switches (Irie) and tuneable masks (E. Molinari, C. Bertarelli, A. Bianco, F. Bortoletto, P. Conconi, G. Crimi, M. Galazzi, E. Giro, A. Lucotti, C. Pernechele, F. Zerbi and G. Zerbi, Proceedings of SPIE Hawaii 2002, Vol.#4842-18, p. 335-342 ("Molinari")) depends on the amount of these conjugated structures that can be incorporated into a host material, such as a polymer, to impart mechanical strength, oxidation resistance, and robustness. Traditionally the way this has been accomplished is through the incorporation of the conjugated molecule directly into the polymer film as an additive. This can lead to phase separation when the amount of photochromic material exceeds 5-6%. At higher concentration levels, problems with homogeneity often occur. A second approach has been to append the photochromic groups as side chains to a polymer backbone. Although this allows the concentration of photochromic groups in the sample to be increased, it also drastically reduces the quantum yield thus compromising the photochromic properties of the material. Stellaci et al. (F. Stellaci, C. Bertarelli, F. Toscano, M. Gallazzi, G. Zotti and G. Zerbi, Adv. Materials 1999, 11, 292-295 ("Stellaci") were able to solve this problem by synthesizing the first diarylethylene *backbone* polymer whose thermal stability was higher than the monomer. They showed that the polymer exhibited photochromism both in solution and in the solid state with a very high quantum yield for the "closed" form reaction.

In addition, U.S. Patent 5,422,181 discloses synthetic textiles containing photochromic pigments by encapsulation of a photochromic pigment in a thermoplastic polymer and their production. Similar, JP-A-06/313210 discloses a photochromic acrylic fiber consisting of an acrylic polymer, an organic photochromic compound and a medium capable to prevent the photochromic compound from migrating.

Further, EP-A-1,314,802 discloses a temperature-sensitive colour-changeable composite fiber which comprises a thermochromic resin phase and their production. Similar, US 2003/0087566 discloses a method of achieving a uniform distribution of reversible thermochromic pigment within a spunmelt Nonwoven fabric by incorporating the reversible thermochromic pigment into the polymer melt prior to extrusion.

Additionally, US 2001/0045547 discloses conductive polymer membrane articles obtained by electrostatically spinning of the required raw materials and US 2003/0168756 discloses an apparatus and method for electrospinning of composite fibers comprising a polymeric material and molecular sieve materials.

**Brief Summary of the Invention**

We found that the incorporation of photochromic materials or any dyes into electrospun fibers gives excellent results. If the dyes are capable of forming color then there can be two different reversible patterns depending on the exposed light wavelength. If the dyes are not photchromic, then the pattern becomes a permanent pattern with the dyes being distributed throughout the fiber and not just on the surface of the fiber as is currently being done by dyed materials.

The invention encompasses the incorporation of molecules such as dyes or reversible photochromic molecules (e.g., dyes) into micro- and nanofibers through the electrospinning process. In this process, a solution of a polymer (such as polymethylmethacrylate (PMMA)) and the photochromic molecule is shaped into a small diameter fiber by the application of electrostatic forces using electric fields that vary, for example, from 300-2000 volts per centimeter. The resulting fibers are collected on a target that can be electrically grounded or held at a voltage lower (or oppositely charged) than that of the "nozzle" where the droplet of polymer/photochromic molecule first emerges from the reservoir of solution. The fibers have diameters that range from 1-2 microns to 10s of nanometers and have been shown to contain a uniform distribution of photochromic molecules throughout. Mats, membranes and nonwoven textiles formed from these fibers have been shown to reversibly change color depending on the wavelength of light they are exposed to. Uses range from nonwoven textiles and membranes that change color depending on the amount and wavelength of light impinging on them (which includes camouflage material), sensors, sensing membranes, counterfit protector, information storage and optical switches.

The invention relates to a process to make a dyed fiber which comprises mixing a dye and a polymer into a solution at a temperature below the temperature at which the dye or polymer degrades, preferably at room temperature (approximately 23° C) or slightly higher but not above the temperature that the dye degrades or oxides, to form a polymer dye solution and electrospinning said polymer dye solution to form a fiber wherein the dye penetrates more than the surface of the fiber. The dye can be a photochromic (for reversal color) or non photochromic (for permanent color).

Another object of the invention is that the fibers can be used to make material that can be worn in activities, such as paint ball, laser tag, or with soft guns. The sensors could be used for activities such as paint ball or with air soft guns. The user would wear clothing made of a material that can change colors. The material could change colors by pressure such as when it is in contact with a pellet such as one from an air soft gun. The material could be pressure sensitive and would change colors at the point of impact. The material could change color by light such as when it is hit with a laser light. The point of impact would change color because the material would be light sensitive.

**Brief Description of the Figures**

Figure 1 illustrates twisted dog-bone shaped fiber (left) typically found in electrospun samples made from 35 wt% polystyrene (PS) in the trahydrofuran (THF). An expanded view is shown on the right in Figure 1.

Figure 2 illustrates the fiber under an optical microscope (left-20x) and FE-SEM (right) ofPMMA+DYE1 fibers.

Figure 3 illustrates fluorescence confocal images of PMMA+ DYE1 taken at two different depths of the same fiber.

Figure 4 illustrates fluorescence confocal images of PMMA+ DYE1, showing the distribution of active photochromic molecules throughout the two fibers shown. The insets represent the DYE1 distribution across an arbitrarily chosen "slice" that traverses the fiber diameter.

Figure 5 illustrates a bundle of aqua colored fibers with yellow circular areas after exposure to laser light at 532 nm. Left: DYE1+ PMMA. Figure 5 also illustrates bundle of deep blue colored fibers with white circular area after exposure to laser beam light at a wavelength of 532 nm Right: DYE2+ PMMA.

Figure 6 illustrates mat of electrospun PMMA + Dye 1 fibers. The dye is in the closed form.

Figure 7 a) illustrates a Mat of PMMA + Dye 1 blue fibers locally exposed to a white light. Figure 7 b) illustrates the same blue fiber mat after subsequent exposition to UV radiation. The UD emblem disappeared.

Figure 8 a) illustrates a mat of PMMA + Dye 3 fibers locally exposed to UV radiation. Figure 8b) illustrates the same fiber mat after stored at 26°C shielded from UV radiation for 20minutes.

**Detailed Description of the Invention**

The invention again relates to a method of making a fiber that incorporates a dye into the fiber. The dye is uniformly dispersed throughout the fiber and not just on the surface. The dye can be any known dye. As examples of substances belonging to this group, there are known photochromic compound, solvatochromic compound, magnetochromic, electrochromic, thermochromic compound, piezochromic compound, and leuco bodies such as triarylmethane dyes, quinone dyes, indigoide dyes, azine dyes and so on. Each of these compounds can change its color by the application of solvent (gaseous or liquid), heat or pressure, irradiation with light, or air oxidation.

If the dye used is not photochromic, the color can permanent If the desired results of the finished product are to have a reversible pattern depending on the light, then the dye used would be a photochromic dye. For example, if clothing is made using fibers containing photochromic dyes, then the clothing can have at least two different patterns or even three or more different patterns depending on the exposure of the clothing to region of light. If the light is in the visible region one pattern can exist, if the exposure is night time with out light, then another pattern can exist, if the clothing is under ultraviolet light a third pattern can exist. If multiple photchromic dyes are used in the fibers, the fibers will change color depending on the type of photochromic dye used and the wave length of the light the fiber is exposed to. It would be possible to use multiple different fibers in an article with each of the fibers having different colors, depending on which wavelength of light the fibers are exposed to. For example, if the desired results are to make a camouflage clothing, tents, and machinery or cover for machinery, then the material can change colors depending on whether it is daytime or nighttime to blend into the surroundings. With respect to camouflage material, the material can be a lighter color in the light similar to the surroundings and become a darker color at night to blend in with the surroundings.

The fibers are made from a polymer dye solution by an electro spinning process as described in Reneker, US 4,323,525, US 4,689,525, US 20030195611, US 20040018226, and US 20010045547, which are incorporated herein by reference.

The following patents which are incorporated by reference contain, by example, are the preferred photochromic dyes: US5,213,733, US5,422,181, US6,440,340, US5,821,287, US20020188043, US20030213942, US20010045547, US20030130456, US20030099910, US20030174560 and the references contained therein.

The polymers that are preferably used are listed in Huang, US 20030195611, US 20040037813, US 20040038014, US 20040018226, US20040013873, US 2003021792, US 20030215624, US 20030195611, U S 20030168756, US 20030106294, US 20020175449, US20020100725 and US20020084178 which are all incorporated by reference.

The pigment can further be used as a monomer for copolymerization and/or to be blended with low melting point polyester, polydimethyl isophthalate (DMI), polypropylene (PP), polymethyl methacrylate (PMMA), polyethylene terephthalate (PET), polycarbonate, polystyrene, polyvinylidene chloride, polyvinylidene fluoride, polyethyleneoxide, nylon 6, nylon 6/6, nylon 11, nylon 12 or mixtures thereof and its blends etc. for preparation of photochromic fibers.

The preferred solvents that may be used are (a) a high-volatility solvent group, including acetone, chloroform, ethanol, isopropanol, methanol, toluene, tetrahydrofuran, water, benzene, benzyl alcohol, 1,4-dioxane, propanol, carbon tetrachloride, cyclohexane, cyclohexanone, methylene chloride, phenol, pyridine, trichloroethane or acetic acid; or

(b) a relatively low-volatile solvent group, including N,N-dimethyl formamide (DMF), dimethyl sulfoxide (DMSO), N,N-dimethylacetamide (DMAc), 1-methyl-2-pyrrolidone (NMP), ethylene carbonate (EC), propylene carbonate (PC), dimethyl carbonate (DMC), acetonitrile (AN), N-methylmorpholine-N-oxide, butylene carbonate (BC), 1,4-butyrolactone (BL), diethyl carbonate (DEC), diethylether (DEE), 1,2-dimethoxyethane (DME), 1,3-dimethyl-2-imidazolidinone (DMI), 1,3-dioxolane (DOL), ethyl methyl carbonate (EMC), methyl formate (MF), 3-methyloxazolidin-2-on (MO), methyl propionate (MP), 2-methyletetrahydrofurane (MeTHF) or sulpholane (SL).

Other solvents that can be used are listed in US20020100725 and US20030195611, which are incorporated by reference. CHCl₃ is the solvent used in the examples.

The amount of polymer and solvent will vary from 0.1-100%, the latter being pure polymer which can only be electrospun from the melt. The concentration of polymer and solvent can be the same as discussed in the electrospinning publications and patents, Reneker, Megelski, Casper, US 4,323,525, US 4,689,525, US 20030195611, US 20040018226 and US 20010045547, which are all incorporated herein by reference.

- Electrospinning or electrostatic spinning is a process for creating fine polymer fibers using an electrically charged solution that is driven from a source to a target with an electrical field. Using an electric field to draw the positively charged solution results in a jet of solution from the orifice of the source container to the grounded target. The jet forms a cone shape, called a Taylor cone, as it travels from the orifice. Typically, as the distance from the orifice increases, the cone becomes stretched until a single fiber originates and travels toward the target. Also prior to reaching the target, and depending on many variables, including target distance, charge, solution viscosity, temperature, solvent volatility, polymer flow rate, and others, the fibers begin to dry. These fibers are extremely thin, typically measured in nanometers or microns. The collection of these fibers on the target, form a randomly-oriented fibrous material with extremely high porosity and surface area, and a very small average pore size.

The basic components required for solvent electrospinning are as follows: A polymer is mixed with a solvent to form a solution having desired qualities. The solution is loaded into a syringe-like container that maybe fluidly connected to a blunt needle to form a spinneret. The needle has a distal opening through which the solution is ejected by a controlled force, represented here in a simplified manner as being supplied by a plunger but can be any appropriate controllable variable rate fluid displacement system and should be automated to ensure accurate flow rates.

Dyes can be incorporated into the fibers when the electrospinning process is carried out at temperatures ranging from a lower limit at which the solvent freezes to an upper limit where the dye degrades. The dyes do not degrade in the electrospinning process because they are done at moderate temperatures in solution compared to the melting point of the polymers used.

It turns out the dye can be mixed into the polymer solution, added to the same solvent as used for the polymer and then the two solutions added together or mixed with the polymer in a dry form and then both dissolved in the solvent. This may differ for the various polymers and dyes used.

**Examples**

The examples contain fibers that consist of a polymer matrix. PMMA (M_{w}=540,000), in which is embedded the following photochromic molecules:

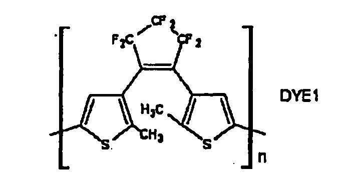

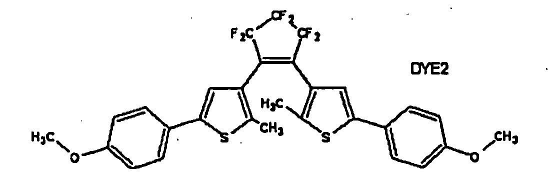

wherein n is average of 7 -8.
DYE 3 is the same chemical formula as DYE 1 with n being 1.

DYE 1, shown above is a photochromic backbone polymer that contains 7-8 repeat units (Degree of Polymerization (DP) = 7-8), while DYE 2, shown above is a photochromic molecule with a specifically chosen end group (Stellacci F, Bertarelli C, Toscano F, Gallazzi MC, Zerbi G, CHEM PHYS LETT 302 (5-6): 563-570, 1999 ("Stellacci"). DYE 3 is the same chemical formula as DYE 1 with n being 1.

To prepare the electrospun fibers, PMMA and either DYE1 or DYE2 are dissolved in CHCl₃ using the specific concentrations shown in Table 1. The resultant DYE1 (or DYE2) + PMMA solution is then electrospun using established processing protocols. The specific parameters used for the first set of experiments described below are summarized in Table 1:

**Table 1**

| ***Concentration*** | ***Voltage kV*** | ***Speed Rate*** | ***H*/*T*** |
|---|---|---|---|
| 10%(+5%DYE1) | 10 | 0.1-0.15 ml/min | 36%/70 F |
| 5.6%(+5%DYE1) | 12 | 0.12ml/hr | 56%/72 F |
| 10.8%(+5.4%DYE2) | 10 | 0.12 ml/hr | 17%/70 F |

In Table 1 the conditions used for the electrospinning of the photochromic fibers are as follows: Concentration is in wt %, Voltage is the potential of the syringe nozzle relative to the grounded target; Speed Rate is the amount of solution provided to the syringe nozzle; H/T is the relative humidity and temperature at the time the electrospun fibers were produced.

As a result of electrospinning the DYE/PMMA solutions, fibers whose diameters range between 1 and 10 microns are produced depending on the concentration of PMMA in CHCl₃. Under other conditions, fibers smaller and bigger than this range have been produced by the electrospinning process as described in Megelski, "Stephens" (J. S. Stephens, J. F. Rabolt, S. Fahnestock and D. B. Chase, MRS Proceedings 774, 31 (2003)), US20030195611 and US20030168756 which are incorporated by reference.

Because of the low molecular weight of the photochromic molecules and their low concentration in the solution, it was determined that their effect on the fiber diameter was negligible. Although the preferable amount of dye in the fiber is from about 0.1 to about 15 wt%, although it is possible that the amount of the dye could be more provided that the maximum concentration of dye cannot exceed the amount where fibers are no longer formed. If the dye is covalently incorporated in the polymer backbone or covalently attached as a side chain, then the preferable amount of dye can be increased to a higher wt% depending on the molecular weight of the dye chromophore relative to the molecular weight of the monomer.

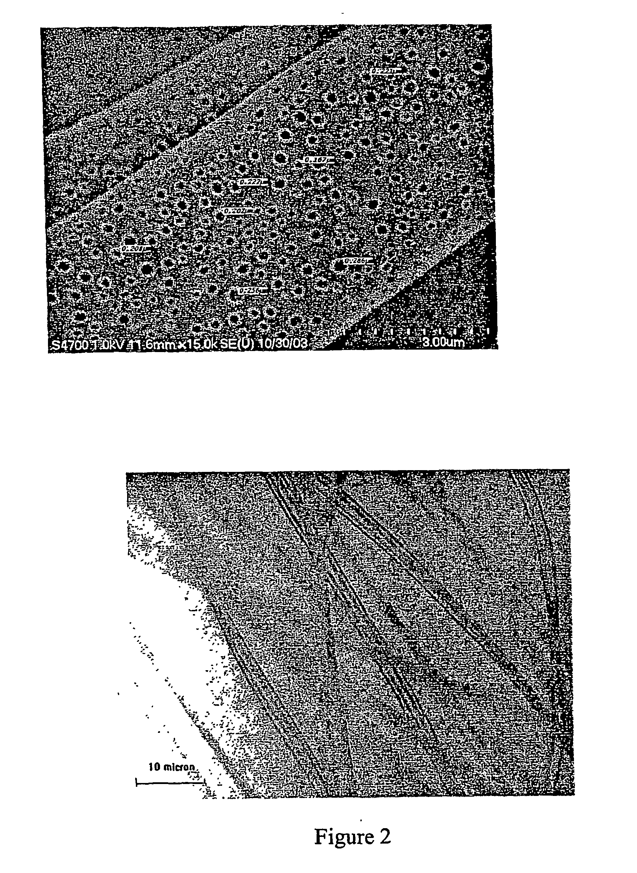

The as-produced fibers have been studied using both optical and field emission scanning electron microscopy (FE-SEM) in order to ascertain any surface topography that may exist and to determine the presence of any morphological defects. As seen in Figure 2, the cross-sectional shape of the fibers adopts a "dog-bone" shape similar to that usually found in PMMA and PS (see Figure 1) fibers (see Megelski). It is also clear from Figure 2 that no beads or other morphological defects are present. The surface of the fibers contains nanopores that increase the active area of the fiber significantly. The average diameter of these pores is approximately 200 nm but Megelski and Casper have produced electrospun fibers with pores that range from 50-1000 nm under different conditions.

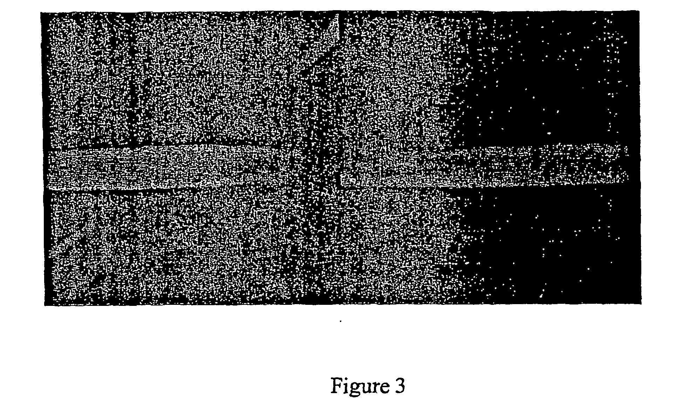

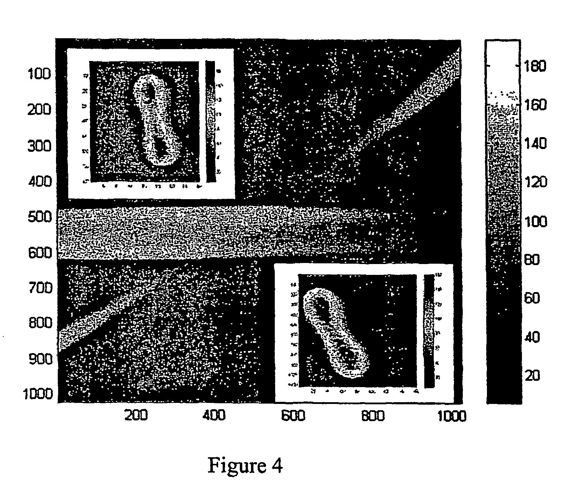

To understand the distribution of the active molecules in the fibers, fluorescence measurements using a confocal microscope (Zeiss LSM510) were performed. Figure 3 contains fluorescence images taken at two different depths within the fiber. The fact that both images show uniform green color due to fluorescence is indicative that the DYE1 is uniformly distributed throughout the fibers. The DYE1 distribution across an arbitrarily chosen "slice" that traverses the fiber diameter for two fibers is shown in Figure 4 and also indicates that the distribution of the photochromic molecules (DYE1) across the fiber is uniform.

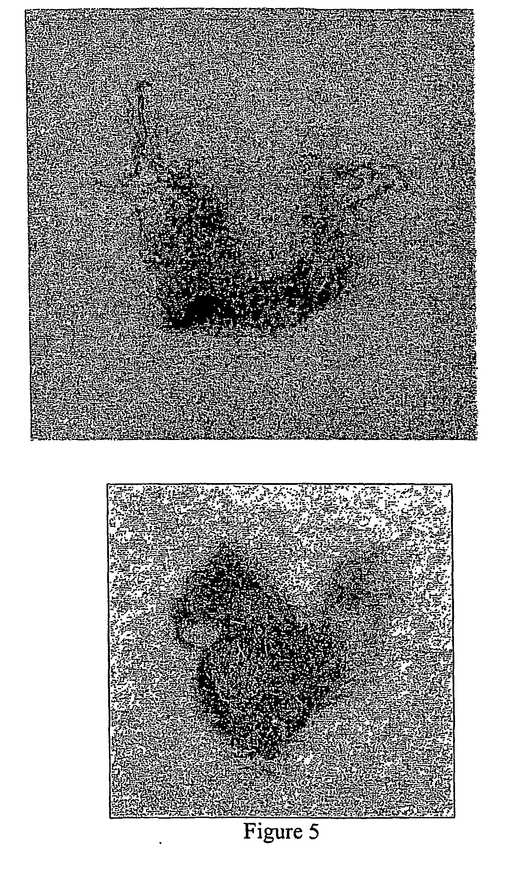

The observed color of the fibers is blue when they are irradiated with UV light and it switches to yellow for DYE1 and to white for DYE2 when a green laser is used (532 nm) to irradiate a collection of fibers as shown in Figure 5. In the left of Figure 5, blue DYE1 + PMMA electrospun fibers were exposed to a circular laser beam of 532 nm in two locations where the fiber bundle is seen to have changed to yellow. Re-exposing these areas to UV light changes these areas back to blue. This switching procedure is reversible and from cyclic studies on DYE1+PMMA films, it has been shown that this change in color can be repeated for at least 400 times without loss of performance. This is a key factor for practical applications of these fibers in nonwoven textiles, optical switches and sensors.

As shown by the right portion of Figure 5, DYE2 + PMMA fibers exhibit a different blue color due to the difference in the absorption characteristics of DYE2. In this case irradiation using a 532 nm wavelength, circular diameter laser beam changes the exposed area from light blue to white. Therefore it is possible to mix different photochromic materials in the same electrospun fibers or co-process different electrospun fibers containing other photochromic molecules in order to increase the number of colors available and then switching them to alternative colors upon exposure to various wavelengths of light.

As a particular example, if lasers were used, one could practice this invention by reversibly storing information on the fibers depending on the wavelength of laser used Since the spatial resolution depends on the wavelength of irradiation, in the example described above a 532 nm laser wavelength laser can be used to "write" features of approximately 250 nm in size on the fibers. With the large surface area available as mentioned previously and the 3-D nature of the electrospun fiber membranes, it could be possible to store information in 3-D at densities comparable to or higher than current day magnetic and optical storage devices.

The specific parameters used for the second set of experiments described below are summarized in Table 2:

Table 2 Conditions used for the electrospinning of the photochromic and thermochromic fibers (Note: *Concentrations* are in weight % of PMMA with respect to the solvent and in brackets the concentration in weight % of photoactive molecule with respect to the polymer matrix; *Potential* is the potential applied to syringe needle relative to the grounded target; *Solution flow rate* is the flux of solution at the needle tip; *H*/*T* are the relative humidity and temperature at the time the electrospun fibers were produced; *Color* is the color of the open and closed form, respectively).

**Table 2**

| ***Concentration*** | ***Potential*** | ***Solution flow rate*** | ***H*/*T*** | ***Color*** |
|---|---|---|---|---|
| 12% (+5% **Dye 1**) | 10 kV | 1.5 ml/hr | 36%/21 C | Yellow/blue |
| 12.6% (+5.4% **Dye 2**) | 10 kV | 0.4 ml/hr | 17%/21 C | White/blue |
| 13% (+ 6% **Dye 3**) | 11 kV | 1.2 ml/hr | 50%/26 C | White/pink |

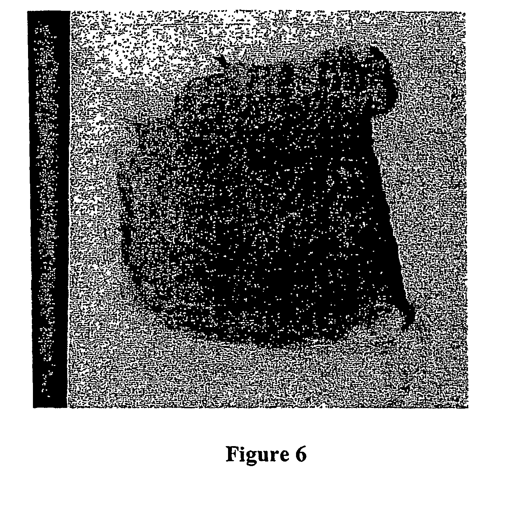

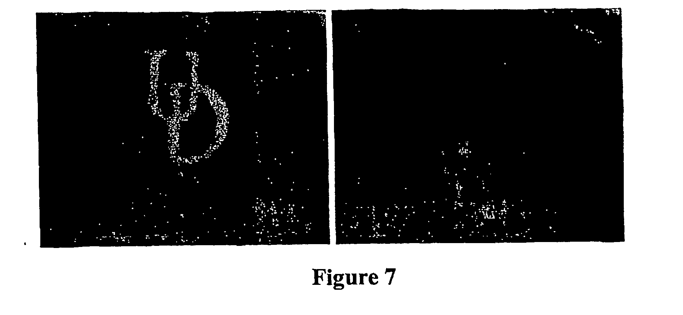

Figure 6 shows a dense mat of PMMA + **Dye 1** fibers collected in approximately fifteen minutes. In this case, the fabric has been irradiated by a UV lamp (366 nm) for an extended period of time (∼3 minutes) to assure that a maximum number of dye molecules throughout the entire thickness have switched from the open to the closed form resulting in the deep blue color. A pattern was then "printed" on the same membrane. A mask with a 1.7 x 1.2 cm "UD" symbol was created on a regular transparency sheet using a normal laser printer. This mask was used to cover the entire fiber mat except for the area of the symbol. Figure 7a shows the mat after it was exposed for less than a minute to a 300 W halogen lamp. The light was filtered to remove the UV tail of the emission spectrum. In this case, the exposed dye molecules switched to the open form, resulting in a color change from blue to yellow. The right part of the figure (Fig. 7b) shows the same area of the mat after the removal of the symbol by the exposure to UV light, confirming the reversibility of the process. An optical fatigue study on PMMA + Dye 1 films has shown that this change in color can be repeated at least 400 times without a loss of performance. (A. Lucotti, C. Bertarelli and G. Zerbi, Chem. Phys. Lett., 392, 549, (2004)). However, this study was conducted on films and not conducted on fibers. This is a key factor for practical applications of these fibers in non-woven textiles, optical switches and sensors.

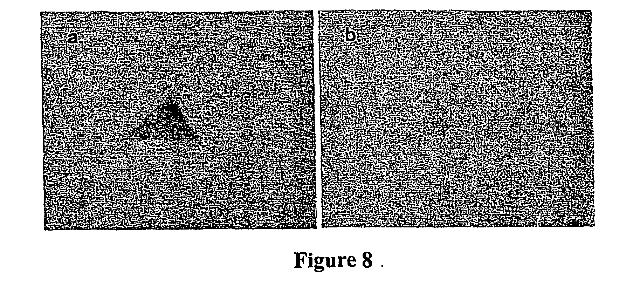

A second non-woven membrane/mat was created by electrospinning PMMA + Dye 3 fibers. This thermochromic dye is colorless in the open form and pink in the closed form. The left side of Figure 8 shows the mat after the exposure of a triangular area (base of triangle: ∼12 mm) to UV light for about three minutes. For this sample, the mask was created in a piece of aluminum foil. The left side of the figure (Fig. 8a) shows the mat/membrane immediately after the exposure. The color of the triangle is a deep pink indicating a high conversion from the opened to closed forms. Figure 8b shows the same area of the mat after it was stored for 20 minutes at 26°C while being shielded from UV radiation. The triangle is now clearly dimmer, indicating that a certain fraction of dye molecules have switched to the closed form. At room temperature, the switching process is slow for this particular dye molecule. It took 5 days for the pink triangle to completely disappear.

All the references described above are incorporated by reference in its entirety for all useful purposes.

While there is shown and described certain specific structures embodying the invention, it will be manifest to those skilled in the art that various modifications and rearrangements of the parts may be made without departing from the spirit and scope of the underlying inventive concept and that the same is not limited to the particular forms herein shown and described.

## Claims

1. A process to make a dyed fiber which comprises mixing at least one dye capable of changing color and said dye comprises photochromic compound, magnetochromic compound, electrochromic compound, thermochromic compound, piezochromic compound, or leuco body and at least one polymer into at least one solvent at a temperature below the temperature at which the dye or polymer degrades to form a polymer dye solution and electrospinning said polymer dye solution to form a fiber wherein the dye penetrates more than the surface of the fiber.

2. The process as claimed in claim 1, wherein said dye is uniformly dispersed through said fiber.

3. The process as claimed in claim 1, wherein said dye is photochromic compound.

4. The process as claimed in claim 2, wherein said dye is photochromic compound.

5. The process as claimed in claim 3, wherein said leuco body is a triarylmethane dye, quinone dye, indigoide dye or azine dye.

6. The process as claimed in claim 1, wherein said polymer is Poly(L-lactide)(PLA), 75/25 Poly(DL-lactide-co-E-caprolactone), 25/75 Poly(DL-lactide-co-E-caprolacto-ne), Poly(E-caprolactone), polyglycolic acid, polydioxanone, collagen, polytetrafluoroethylene, polyurethane, polyester, polypropylene, polyethylene, polybutylene or silicone.

7. The process as claimed in claim 1, wherein said polymer dye solution contains at least one solvent selected from the group consisting of hexafluoroisopropanol, dichloromethane, dimethylacetamide, chloroform, dimethylformamide, methylene chloride and xylene.

8. The process as claimed in claim 1, wherein said polymer is a polyester, polydimethyl isophthalate (DMI), polymethyl methacrylate (PMMA), polyethylene terephthalate (PET), polycarbonate, polystyrene, polyvinylidene chloride, polyvinylidene fluoride, polyethyleneoxide, nylon 6, nylon 6/6, nylon 11, nylon 12 or mixtures thereof.

9. The process as claimed in claim 8, wherein said at least one solvent is a high volatile solvent group or a low-volatile solvent group or a mixture thereof.

10. The process as claimed in claim 9, wherein said solvent is acetone, chloroform, ethanol, isopropanol, methanol, toluene, tetrahydrofuran, water, benzene, benzyl alcohol, 1,4-dioxane, propanol, carbon tetrachloride, cyclohexane, cyclohexanone, methylene chloride, phenol, pyridine, trichloroethane or acetic acid; N,N-dimethyl formamide (DMF), dimethyl sulfoxide (DMSO), N,N-dimethylacetamide (DMAc), 1-methyl-2-pyrrolidone (NMP), ethylene carbonate (EC), propylene carbonate (PC), dimethyl carbonate (DMC), acetonitrile (AN), N-methylmorpholine-N-oxide, butylene carbonate (BC), 1,4-butyrolactone (BL), diethyl carbonate (DEC), diethylether (DEE), 1,2-dimethoxyethane (DME), 1,3-dimethyl-2-imidazolidinone (DMI), 1,3-dioxolane (DOL), ethyl methyl carbonate (EMC), methyl formate (MF), 3-methyloxazolidin-2-on (MO), methyl propionate (MP), 2-methyletetrahydrofurane (MeTHF) or sulpholane (SL)..

11. A process to make a dyed fiber which comprises mixing at least a photochromic dye and/or a thermochromic dye and a polymethyl methacrylate polymer into a CHCl₃ solution to form a polymer dye solution and electrospinning said polymer dye solution to form a fiber wherein the dye penetrates more than the surface of the fiber.

12. The process as claimed in claim 1, wherein the electrospinning is conducted at room temperature.

13. The process as claimed in claim 1, wherein there are at least two dyes capable of changing color being used.

14. The process as claimed in claim 1, wherein there are at least two polymers being used.

15. A camouflage material which comprises the fiber obtained from the process as claimed in claim 1.

16. A sensor which comprises the fiber obtained from the process as claimed in claim 1.

17. A sensing membrane which comprises the fiber obtained from the process as claimed in claim 1.

18. A counterfeit protector which comprises the fiber obtained from the process as claimed in claim 1.

19. An information storage mechanism which comprises the fiber obtained from the process as claimed in claim 1.

20. An optical switch which comprises the fiber obtained from the process as claimed in claim 1.

## Patentansprüche

1. Verfahren zur Herstellung einer gefärbten Faser, umfassend das Mischen von mindestens einem Farbstoff, der seine Farbe verändern kann, und wobei dieser Farbstoff eine photochrome Verbindung, eine magnetochrome Verbindung, eine elektrochrome Verbindung, eine thermochrome Verbindung, eine piezochrome Verbindung oder einen Leukokörper umfasst, und von mindestens einem Polymer in mindestens einem Lösungsmittel bei einer Temperatur unterhalb der Temperatur, bei der sich der Farbstoff oder das Polymer zersetzt, um eine Polymerfarbstofflösung zu bilden, sowie das Elektrospinnen dieser Polymerfarbstofflösung, um eine Faser zu bilden, wobei der Farbstoff mehr als die Oberfläche der Faser durchdringt.

2. Verfahren nach Anspruch 1, wobei der Farbstoff gleichmäßig durch die Faser hindurch verteilt ist.

3. Verfahren nach Anspruch 1, wobei der Farbstoff eine photochrome Verbindung ist.

4. Verfahren nach Anspruch 2, wobei der Farbstoff eine photochrome Verbindung ist.

5. Verfahren nach Anspruch 3, wobei der Leukokörper ein Triarylmethanfarbstoff, ein Chinonfarbstoff, ein indigoider Farbstoff oder ein Azinfarbstoff ist.

6. Verfahren nach Anspruch 1 , wobei das Polymer Poly-L-lactid (PLA), 75/25 Poly(DL-lactid-co-ε-caprolacton), 25/75 Poly(DL-lactid-co-ε-caprolacton), Poly-εcaprolacton, Polyglykolsäure, Polydioxanon, Kollagen, Polytetrafluorethylen, Polyurethan, Polyester, Polypropylen, Polyethylen, Polybutylen oder Silikon ist.

7. Verfahren nach Anspruch 1, wobei die Polymerfarbstofflösung mindestens ein Lösungsmittel ausgewählt aus der Gruppe bestehend aus Hexafluorisopropanol, Dichlormethan, Dimethylacetamid, Chloroform, Dimethylformamid, Methylenchlorid und Xylol enthält.

8. Verfahren nach Anspruch 1, wobei das Polymer ein Polyester, ein Polydimethylisophthalat (DMI), ein Polymethylmethacrylat (PMMA), ein Polyethylenterephthalat (PET), ein Polycarbonat, ein Polystyrol, ein Polyvinylidenchlorid, ein Polyvinylidenfluorid, ein Polyethylenoxid, Nylon 6, Nylon 6/6, Nylon 11, Nylon 12 oder eine Mischung davon ist.

9. Verfahren nach Anspruch 8, wobei das mindestens eine Lösungsmittel eine sehr flüchtige Lösungsmittelgruppe oder eine wenig flüchtige Lösungsmittelgruppe oder eine Mischung davon ist.

10. Verfahren nach Anspruch 9, wobei das Lösungsmittel Aceton, Chloroform, Ethanol, Isopropanol, Methanol, Toluol, Tetrahydrofuran, Wasser, Benzol, Benzylalkohol, 1,4-Dioxan, Propanol, Kohlenstofftetrachlorid, Cyclohexan, Cyclohexanon, Methylenchlorid, Phenol, Pyridin, Trichlorethan oder Essigsäure; N,N-Dimethylformamid (DMF), Dimethylsulfoxid (DMSO), N,N-Dimethylacetamid (DMAc), 1-Methyl-2-pyrrolidon (NMP), Ethylencarbonat (EC), Propylencarbonat (PC), Dimethylcarbonat (DMC), Acetonitril (AN), N-Methylmorpholin-N-oxid, Butylencarbonat (BC), 1,4-Butyrolacton (BL), Diethylcarbonat (DEC), Diethylether (DEE), 1,2-Dimethoxyethan (DME), 1,3-Dimethyl-2-imidazolidinon (DMI), 1,3-Dioxolan (DOL), Ethylmethylcarbonat (EMC), Methylformiat (MF), 3-Methyloxazolidin-2-on (MO), Methylpropionat (MP), 2-Methyltetrahydrofuran (MeTHF) oder Sulfolan (SL) ist.

11. Verfahren zur Herstellung einer gefärbten Faser, umfassend das Mischen von mindestens einem photochromen Farbstoff und/oder thermochromen Farbstoff und einem Polymethylmethacrylatpolymer in einer CHCl₃-Lösung, um eine Polymerfarbstofflösung zu bilden, sowie das Elektrospinnen dieser Polymerfarbstofflösung, um eine Faser zu bilden, wobei der Farbstoff mehr als die Oberfläche der Faser durchdringt.

12. Verfahren nach Anspruch 1, wobei das Elektrospinnen bei Raumtemperatur durchgeführt wird.

13. Verfahren nach Anspruch 1, wobei mindestens zwei Farbstoffe, die ihre Farbe verändern können, verwendet werden.

14. Verfahren nach Anspruch 1, wobei mindestens zwei Polymere verwendet werden.

15. Tammaterial, das die aus dem Verfahren nach Anspruch 1 erhaltene Faser umfasst.

16. Sensor, der die aus dem Verfahren nach Anspruch 1 erhaltene Faser umfasst.

17. Sensormembran, die die aus dem Verfahren nach Anspruch 1 erhaltene Faser umfasst.

18. Fälschungsschutz, der die aus dem Verfahren nach Anspruch 1 erhaltene Faser umfasst.

19. Mechanismus zur Informationsspeicherung, der die aus dem Verfahren nach Anspruch 1 erhaltene Faser umfasst.

20. Optischer Schalter, der die aus dem Verfahren nach Anspruch 1 erhaltene Faser umfasst.

## Revendications

1. Procédé pour produire une fibre colorée qui comprend le mélangeage d'au moins un colorant capable de changer la couleur et ledit colorant comprend le composé photochromique, le composé magnétochromique, le composé électrochromique, le composé thermochromique, le composé piézochromique ou le leuco-corps et au moins un polymère dans au moins un solvant à une température sous la température à laquelle le colorant ou le polymère se dégradent pour former une solution de polymère et colorant et l'électrofilage de ladite solution de polymère et colorant pour former une fibre où le colorant pénètre plus que la surface de la fibre.

2. Procédé selon la revendication 1, où ledit colorant est dispersé uniformément par ladite fibre.

3. Procédé selon la revendication 1, où ledit colorant est le composé photochromique.

4. Procédé selon la revendication 2, où ledit colorant est le composé photochromique.

5. Procédé selon la revendication 3, où ledit leuco corps est un colorant triarylméthane, colorant quinone, colorant indigoïde ou colorant azine.

6. Procédé selon la revendication 1, où ledit polymère est Poly(L-lactide) (PLA), 75/25, Poly(DL-lactide-co-E-caprolactone), 25/75 Poly(DL-lactide-co-E-caprolactone), Poly(E-caprolactone), acide polyglycolique, polydioxanone, collagène, polytetrafluoroéthylène, polyuréthane, polyester, polypropylène, polyéthylène, polybuthylène ou silicone.

7. Procédé selon la revendication 1, où ladite solution de polymère et colorant comprend au moins un solvant sélecté du groupe formé de hexafluoroisopropanol, dichlorométhane, diméthylacétamide, chloroforme, diméthylformamide, chlorure de méthylène et xylène.

8. Procédé selon la revendication 1, où ledit polymère est un polyester, polydiméthylisophtalate (DMI), polyméthyl méthacrylate (PMMA), polyéthylène téréphtalate (PET), polycarbonate, polystyrène, chlorure de polyvinylidène, florure de polyvinylidène, oxyde de polyéthylène, nylon 6, nylon 6/6, nylon 11, nylon 12 ou mélanges de ceux-ci.

9. Procédé selon la revendication 8, où ledit au moins un solvant est un groupe de solvants très volatils ou un groupe de solvants faible-volatils ou un mélange de ceux-ci.

10. Procédé selon la revendication 9, où ledit solvant est acétone, chloroforme, éthanol, isopropanol, méthanol, toluène, tétrahydrofurane, eau, benzène, benzylalcohol, 1,4-dioxane, propanol, tétrachlorure de carbone, cyclohexane, cyclohexanone, chlorure de méthylène, phénol, pyridine, trichloroéthane ou acide acétique; N, N-diméthyl formamide (DMF), diméthyl sulfoxyde (DMSO), N,N-diméthylacétamide (DMAc), 1-méthyl-2-pyrrolidone (NMP), éthylène carbonate (EC), propylène carbonate (PC), diméthyl carbonate (DMC), acétonitrile (AN), N-méthylmorpholine-N-oxide, butylène carbonate (BC), 1,4-butyrolactone (BL), diéthylcarbonate (DEC), diéthyléther (DEE), 1,2-diméthoxyéthane (DME), 1,3-diméthyl-2-imidazolidinone (DM1), 1,3-dioxolane (DOL), éthyl méthyl carbonate (EMC), méthyl format (MF), 3-méthyloxazolidin-2-on (MO), méthyl propionat (MP), 2-méthyltetrahydrofurane (MeTHF) ou sulpholane (SL).

11. Procédé pour produire un fibre colorée qui comprend le mélangeage d'au moins un colorant photochromique et/ou un colorant thermochromique et un polymère polyméthyle méthacrilate dans une solution CHCl₃ pour former une solution de polymère et colorant et l'électrofilage de ladite solution de polymère et colorant pour former une fibre où le colorant pénètre plus que la surface de la fibre.

12. Procédé selon la revendication 1, où l'électrofilage est réalisé à la température de la chambre.

13. Procédé selon la revendication 1, où il y a au moins deux colorants capables de changer la couleur étant utilisée.

14. Procédé selon la revendication 1, où il y a au moins deux colorants capables de changer la couleur des polymères étant utilisés.

15. Un matériau de camouflage qui comprend la fibre obtenue par le procédé comme défini dans la revendication 1.

16. Un capteur qui comprend la fibre obtenue par le procédé comme défini dans la revendication 1.

17. Une membrane sensible qui comprend la fibre obtenue par le procédé comme défini dans la revendication 1.

18. Un protecteur faux qui comprend la fibre obtenue par le procédé comme défini dans la revendication 1.

19. Un mécanisme de stockage d'information qui comprend la fibre obtenue par le procédé comme défini dans la revendication 1.

20. Un commutateur optique qui comprend la fibre obtenue par le procédé comme défini dans la revendication 1.
